# EUROPÄISCHE PATENTSCHRIFT

(11) **EP 1 927 903 B1**
(45) Veröffentlichungstag und Bekanntmachung des Hinweises auf die Patenterteilung: **23.02.2022**
(21) Anmeldenummer: 07021378.0
(22) Anmeldetag: 02.11.2007
(51) Int. Cl.: G01S 19/02, G04G 7/00

(54) **Vorrichtung und Verfahren zum Charakterisieren einer Uhr in einem Satelliten**
Device and method for characterising a clock in a satellite
Dispositif et procédé destinés à caractériser une montre dans un satellite

(30) Priorität: 07.11.2006 DE 102006052681
(43) Veröffentlichungstag der Anmeldung: 04.06.2008
(73) Patentinhaber: Airbus Defence and Space GmbH, 82024 Taufkirchen (DE)
(72) Erfinder: Mudrak, Alexandre, D-82205 Gilching (DE); Trautenberg, Hans L., D-85521 Ottobrunn (DE)
(74) Vertreter: Frenkel, Matthias Alexander

(56) Entgegenhaltungen:
- WO-A1-97/14056
- GB-A- 2 380 626
- US-A- 5 363 110
- DALY P ET AL: "Frequency and time stability of GPS and GLONASS clocks" 19900523; 19900523 - 19900525, 23. Mai 1990 (1990-05-23), Seiten 127-139, XP010001335
- SEMLER J R: "Common-view GPS time transfer accuracy and stability results" 19900320; 19900320 - 19900323, 20. März 1990 (1990-03-20), Seiten 383-391, XP010001155
- SPILKER J J: "GPS SIGNAL STRUCTURE AND PERFORMANCE CHARACTERISTICS", NAVIGATION: JOURNAL OF THE INSTITUTE OF NAVIGATION, INSTITUTE OF NAVIGATION, FAIRFAX, VA, US, vol. 25, no. 2, 21 June 1978 (1978-06-21), pages 121-146, XP001080525, ISSN: 0028-1522

## Beschreibung

Die vorliegende Erfindung eine Vorrichtung zum Charakterisieren einer Uhr in einem Satelliten gemäß Anspruch 1 und ein entsprechendes Verfahren gemäß Anspruch 8.

Bisher wird nicht die Frequenz sondern Laufzeitunterschiede zur Messung bzw. Schätzung der Stabilität einer Uhr in einem Satelliten verwendet. Dabei geht nicht nur ein Orbitfehler, sondern auch ein Signalsaufbereitungsfehler massiv in die Messung bzw. Schätzung mit ein. Dies resultiert insbesondere daraus, dass, wenn sich ein Satellit nicht in einer genau bestimmten Position befindet, die Laufzeiten nicht eindeutig zugeordnet werden können. Wenn sich der Satellit während der Messung um einen großen Abschnitt in seiner Umlaufbahn bewegt, kann bei nicht exakt bekannter Kenntnis der Position des Satelliten das Auswertungssignal zeitlich verzögert bei einem Empfänger eintreffen. Daher kann aus einem Auswertungssignal, das eine Information über eine Uhr enthält, wie beispielsweise die Uhrzeit dieser Uhr, nur eine sehr ungenaue Schätzung der Stabilität dieser Uhr durchgeführt werden.

Die GB-A-2 380 626 betrifft ein globales Satellitennavigationssystem, bei dem eine Bodenstation Zeitsignale mittels eines Kommunikations-Uplinks zu mehreren MEO-Navigationssatelliten über MEO- oder geostationäre Kommunikationssatelliten überträgt. Dadurch sollen die Navigationssatelliten auch mit einfacheren Uhren arbeiten können. Von den Navigationssatelliten werden Zeitsignale an eine Überwachungs- und Steuerstation am Boden übertragen, um Korrekturen ausführen zu können, die an die Bodenstation zur Zeitsignalkorrektur übermittelt werden.

Die Veröffentlichung "Frequency and time stability of GPS and GLONASS clocks", DALY P ET AL, 19900523; 19900523 - 19900525, 23. Mai 1990 (1990-05-23), Seiten 127-139, XP010001335, beschäftigt sich mit Ähnlichkeiten und Unterschieden zwischen den von den beiden globalen Satellitennavigationssystemen (NAVSTAR-)GPS und GLONASS verwendeten Uhren und analysiert die Uhren an Bord der Navigationssatelliten sowie die Stabilität der zentralen Steueruhren für diese Systeme.

Die Veröffentlichung "Common-view GPS time transfer accuracy and stability results", SEMLER J R, 19900320; 19900320 - 19900323, 20. März 1990 (1990-03-20), Seiten 383-391, XP010001155, präsentiert die Ergebnisse einer Untersuchung der Zeit- und Frequenzverbreitung in GPS

Die US-A-5 363 110 beschreibt ein Positionierungssystem und ein Verfahren, die mehrere künstliche Satelliten nutzen, in welchen Zeiten von Positionierungszeitsignalen, die von wenigstens vier künstlichen Satelliten in ein für die Positionierung verfügbares Gebiet übertragen werden, immer koinzident mit einer Standardzeit einer Bodenkontrollstation gemacht werden, um die Zeitgenauigkeit aufrecht zu erhalten. In der Bodenkontrollstation werden Phasen eines Empfangs-PN-Kodes, der aus dem im Positionierungssignal des künstlichen Satelliten enthaltenen Zeitsignals erhalten wird, und eines Pseudo-Empfangs-PN-Kodes, der durch Verzögern der Standardzeit der Bodenkontrollstation durch eine in Echtzeit gemessene Funkwellenausbreitungszeit erhalten wird, korrespondierend zu einem Bereich zwischen der Bodenkontrollstation und dem künstlichen Satelliten verglichen; aus dem erkannten Zeitfehler wird ein Zeitkorrekturbefehlssignal erhalten und an den künstlichen Satelliten zur Korrektur der Zeit des Positionierungszeitsignal des künstlichen Satelliten übertragen.

Es ist daher eine Aufgabe der vorliegenden Erfindung, eine Möglichkeit zu schaffen einer, die eine genauere Bestimmung der Stabilität einer Uhr in einem Satelliten ermöglicht.

Diese Aufgabe wird durch eine Vorrichtung zum Charakterisieren einer Uhr in einem Satelliten gemäß Anspruch 1 und ein entsprechendes Verfahren gemäß Anspruch 8 gelöst. Bevorzugte Ausgestaltungen der Erfindung ergeben sich aus den abhängigen Ansprüchen.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung sowie in den Zeichnungen werden die in der hinten angegebenen Bezugszeichenliste verwendeten Begriffe und zugeordneten Bezugszeichen verwendet.

In den Zeichnungen zeigen:
- Fig. 1: eine schematische Darstellung eines Anwendungsbeispiels der vorliegenden Erfindung;
- Fig. 2: eine Darstellung einer Charakterisierung einer relativen Frequenzstabilität einer Satellitenuhr;
- Fig. 3: ein Flussdiagramm eines Ausführungsbeispiels des erfindungsgemäßen Verfahrens; und
- Fig. 4: eine Prinzipdarstellung von Eingangsdaten zur Verarbeitung und den daraus erhaltenen Ausgangsdaten gemäß einem Ausführungsbeispiel der vorliegenden Erfindung.

Mit Folgenden können gleiche und/oder funktional gleiche Elemente mit den gleichen Bezugszeichen versehen sein. Die im Folgenden angegebenen absoluten Werte und Maßangaben sind nur beispielhafte Werte und stellen keine Einschränkung der Erfindung auf derartige Dimensionen da.

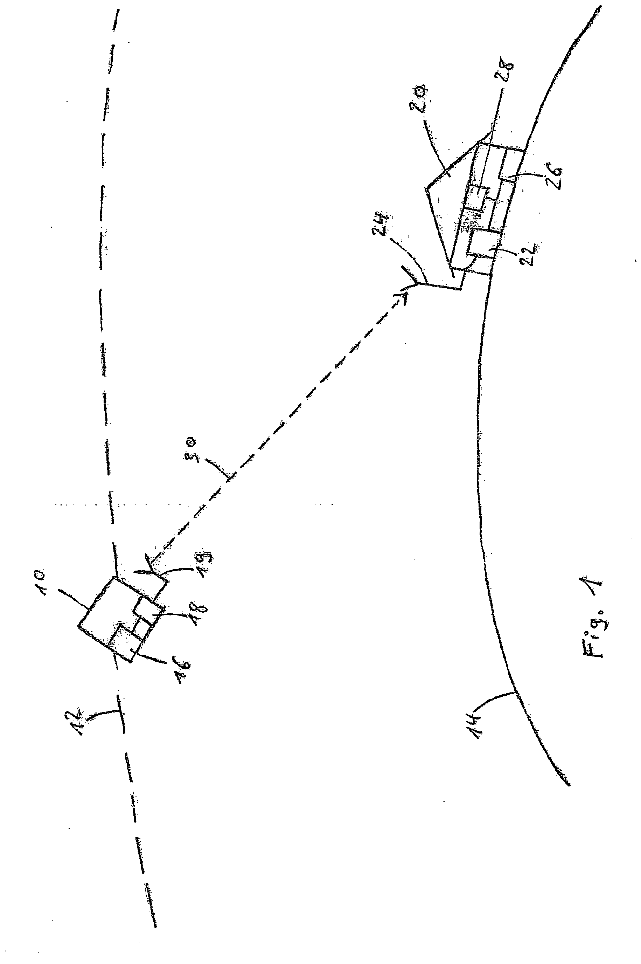

Fig. 1 zeigt eine schematische Darstellung eines Anwendungsbeispiels der vorliegenden Erfindung. Hierbei umkreist ein der Satellit 10 in einer Umlaufbahn 12 den Erdboden 14. Der Satellit 10 hat dabei eine Satellitenuhr 16, welche mit einer Sendeeinrichtung 18 verbunden ist, die eine Antenne 19 aufweist. Weiterhin zeigt die Fig. 1 eine Empfangsstation 20 welche sich auf dem Erdboden 14 befindet. Die Empfangsstation 20 hat eine Empfangseinrichtung 22 mit einer Antenne 24. Weiterhin hat die Empfangstation 20 eine Auswerteeinrichtung 26, die mit der Empfangseinrichtung 22 verbunden ist. Zusätzlich umfasst die Empfangsstation 20 noch eine Empfängeruhr 28, die mit der Empfangseinrichtung 22 sowie der Auswerteeinrichtung 26 verbunden ist. Die Empfängeruhr 28 hat dabei vorzugsweise eine größere Genauigkeit als die Senderuhr 16. Beispielsweise kann die Empfängeruhr 28 einen aktiven H-Maser aufweisen, der eine hohe Frequenzstabilität hat.

Bei seinem Weg durch den Orbit 12 kann der Satellit 10 Sendesignale 30 von seiner Antenne 19 an eine Antenne 24 der Empfangsstation 20 senden. Dabei kann der Satellit 10 Information der Satellitenuhr 16 (die beispielsweise die Uhrzeit der Satellitenuhr 16) auf das Sendesignal 30 aufmodulieren. Dies kann beispielsweise durch eine Frequenzmodulation erfolgen. In diesem Fall kann aus der Frequenz des Sendesignals 30 in der Empfangsstation 20 die Information der Satellitenuhr 16 in der Empfangseinrichtung 22 bzw. der Auswerteeinrichtung 26 zurück gewonnen werden. Hier zu wird vorzugsweise ein Signal der Empfängeruhr 28 als Referenz verwendet, wobei die Empfängeruhr 28 die höhere Genauigkeit als die Satellitenuhr 16 aufweist. In diesem Fall lässt sich die von der Empfängeruhr 28 gelieferte Referenz einsetzen, um die Stabilität der aus Satellitenuhr 16 hochgradig genau zu bestimmen. Zugleich kann beispielsweise auch die aktuelle Uhrzeit der Satellitenuhr 16 in der Empfangsstation 20 ausgelesen werden.

Durch eine derartige Anordnung ist es möglich, einen zusätzlichen Charakterisierungstest für eine Satellitenuhr in ein Experimentationsprogramm wie beispielsweise für GSTB-V2 (Galileo System Test Bed Version 2) zu implementieren. Dieser Test besteht in der Charakterisierung der primären Satellitenuhr (einschließlich der relativen Frequenzinstabilität im Hinblick auf Allan-Abweichungen, Frequenzoffset und Frequenzdrift bezüglich TAI, TAI=Time Atomic International), wobei eine Trägerfrequenzmessung von Sendesignalen mit der Satellitenuhr verwendet wird, welche in einer Empfangsstation am Erdboden empfangen werden. Die Station ist vorzugsweise mit einer stabilen Atomuhr (beispielsweise einem aktiven H-Maser) ausgerüstet und hat vorzugsweise eine Verbindung zu TAI.

Die Aufgaben des Testfalls können folgendermaßen beschrieben werden:
- Einschätzung der Kurzzeit-Stabilität der Satellitenuhr:
   Kurzzeit-Stabilität ist ein fundamentaler Faktor für die Durchführung einer Navigation (im Hinblick auf die Erneuerungsrate des Satellitenuhr-Vorhersagemodells innerhalb der Navigationsmitteilung), um den Zeitmodell-Fehlerbeitrag zum Gesamtfehler UERE (UERE= User Equivalent Range Error) unterhalb der spezifizierten Systemanforderung zu halten.
- Einschätzung der Mittel- und Langzeit-Stabilität und -Drift der Satellitenuhr:
   Das Erfordernis zum Rekalibrieren einer Atomuhr hängt im Wesentlichen von der Langzeit-Stabilität ab. Hierdurch ist die Charakterisierung der Satellitenuhr wichtig für das Aufrechterhalten des Systembetriebs.

Beide Aufgaben des Tests sollten so früh wie möglich erfüllt werden, um Erfahrung über die Leistungsfähigkeit der primären Satellitenuhr an Bord beispielsweise des Galileo-Systems zu sammeln. Dies ermöglicht eine Bewertung des Beitrags der Satellitenuhr zum gesamten Fehler-Budgets (beispielsweise des Galileo-Systems) in einer früheren Phase der System-Entwicklung und ermöglicht ferner ein Eingreifen von den Gegenmaßnahmen während der IOV-Phase für den Fall dass Abweichungen entdeckt werden.

Es wird angenommen, dass der zusätzliche Test die Leistungsfähigkeit einer sekundären Uhr durch Ausnutzen von Phasendifferenz-Messungen zwischen der primären und der sekundären Uhr überprüft. Da sich ein solcher Test auf das relative Verhalten der Uhr bezieht und sich im Wesentlichen auf die sekundäre Uhr bezieht, wird die Bestimmung des Verhaltens der primären Uhr(en) als von überragender Bedeutung betrachtet.

Durch die vorliegende Erfindung wird ein innovativer Test zur Analyse der Leistungsfähigkeit von beispielsweise GSTB-V2 on-board Uhren durch eine Bestimmung der Frequenz des Satellitensignals ermöglicht, welches am Erdboden empfangen und mit einer präzisen Atomuhr verglichen wird. Der Begriff "präzise" ist dabei in Bezug auf die on-board-Uhr, das heißt die Satellitenuhr zu beziehen. Beispielsweise kann ein aktiver H-Maser eine solche präzise Atomuhr am Boden sein.

Ein erster Test des vorgeschlagenen Verfahrens bzw. Ansatzes zum Charakterisieren einer Uhr wurde bereits unter Verwendung von GPS-Beobachtungen gemacht.

Die Verwendung von SIS-Trägerfrequenz-Messungen (SIS= Signal in Space, d.h. Sendesignal) zur Charakterisierung der Satellitenuhr hat den Vorteil, dass die Signallaufzeit während der Ausbreitung nicht berücksichtigt zu werden braucht, inklusive Hardware-Verzögerungen, welche ein kritischer Punkt bezüglich der Stabilität eines GSTB-V2 - Empfängers (d.h. die Empfangsstation 20, wie sie in Fig. 1 dargestellt ist) sind. Lediglich Veränderungen der Signallaufzeit während einzelnen Frequenzmessungen müssen berücksichtigt werden, da die Zeitpunkte für die einzelnen Frequenzmessungen sehr kurz gemacht werden können.

Um Frequenzmessungen für eine Satellitenuhr-Charakterisierung korrekt durchzuführen ist es erforderlich, die Doppler-Verschiebung auf Grund der Bewegung des Satelliten zu berücksichtigen. Hierzu sollten beispielsweise bestimmte Anforderungen bezüglich der Präzision der GSTB-V2-Satelliten-Epheremide erfüllt sein. Diese Anforderung an sie ist jedoch nicht sehr streng (etwa 1 -2 m (95 Prozent) nach Signalverarbeitung).

Ausbreitungseffekte in der Ionosphäre haben in erster Näherung keine Wirkung auf die Frequenz des empfangen Signals. Die Frequenzmessungen sollten jedoch um nicht-lineare ionosphärische Effekte korrigiert werden, um eine Charakterisierung der Satellitenuhren durch Mittelungsintervalle von mehreren Stunden bis zu einem Tag zu ermöglichen, wo diese Effekte am meisten sichtbar sind. Eine solche Korrektur kann durch die Nutzung von ionosphärischen Karten erfolgen, wie sie durch die DLR (DLR= Deutsches Zentrum für Luft- und Raumfahrt) produziert werden. Alternativ können Produkte des Internationalen GPS Service genutzt werden. Wenn 2-Frequenz-Messungen verfügbar sind, kann schließlich eine so genannte "Ionosphären-freie" Messungskombination berechnet werden.

Für derzeitige GPS-Beobachtungen beträgt der in Form der Allan-Abweichungen ausgedrückte inhärente Messungsstörpegel etwa 1*10⁻¹¹ (bei einer Sekunde) für Frequenzmessungen (berechnet von GPS-Trägerphasendaten) und etwa 3*10⁻¹⁰ bis 1*10⁻⁹ für die Pseudo-Entfernungsmessungen (Signallaufzeitverzögerung), das heißt die Präzision der Phasenmessungen ist mindestens 30-Mal besser als die Pseudo-Entfernungsmessungen.

Diese Messverfahrensweise kann unter Ausnutzung der Frequenz-(Doppler) und Trägerphasenmessungen eines Galileo-SIS implementiert werden. Folglich sollte der GSTB-V2 TUR (TUR= Test User Receiver) diese Typen von Messungen möglichen. Zusätzlich sollte die Empfangsstation, das heißt der TUR, durch Frequenzsignale einer Uhr am Erdboden versorgt werden, wobei die Uhr am Boden frequenzstabiler als diejenige im Satelliten, das heißt die on-board Uhr, sein sollte. Die Uhr am Boden kann dabei beispielsweise ein aktiver H-Maser sein. Um die Effekte einer möglichen Langzeit-Frequenzdrift der Uhr am Boden auf die experimentellen Ergebnisse zu reduzieren kann diese Uhr zusätzlich von dem Internationalen Zeitstandard TAI/ UTC gesteuert werden (UTC = Universal Time Coordinated). Diese Steuerung wird auch zum Charakterisieren der Frequenzgenauigkeit und der Frequenzdrift der Satellitenuhr bezüglich des Internationalen Zeitstandards, das heißt TAI/UTC benötigt.

Die Frequenzmessungen und die differenzierten Trägerphasenmessungen werden nur durch zeitweilige Variationen der SIS-Laufzeitverzögerungen, Empfängerverzögerungen und Umlaufbestimmungsfehlern beeinflusst. Zusätzlich ist der TUR-Messungsstörpegel in den Trägerphasenmessungen und der Mehrwegeausbreitungsfehler darin zehn mal niedriger als die selben für den Fall der Pseudo-Reichweitenmessung. Aus diesem Grunde ist eine Kombination von SIS-Trägerphasen- und SIS-Trägerfrequenzmessungen perfekt geeignet für eine Satellitenuhr-Charakterisierung.

Auf Grund der Verfügbarkeit von notwendiger Infrastruktur und zusätzlichen Produkten (wie beispielsweise die ionosphärischen Karten und der meteorologischen Daten) erscheint eine Messreihe in Einrichtungen der DLR in Oberpfaffenhofen als eine ökonomische und direkte Lösung. Der GSTB-V2-TUR (der an einen aktiven H-Maser im Zeitlaboratorium der DLR angeschlossen ist) kann selbst als ausreichend geeignet betrachtet werden, um als Frequenzsensor so arbeiten.

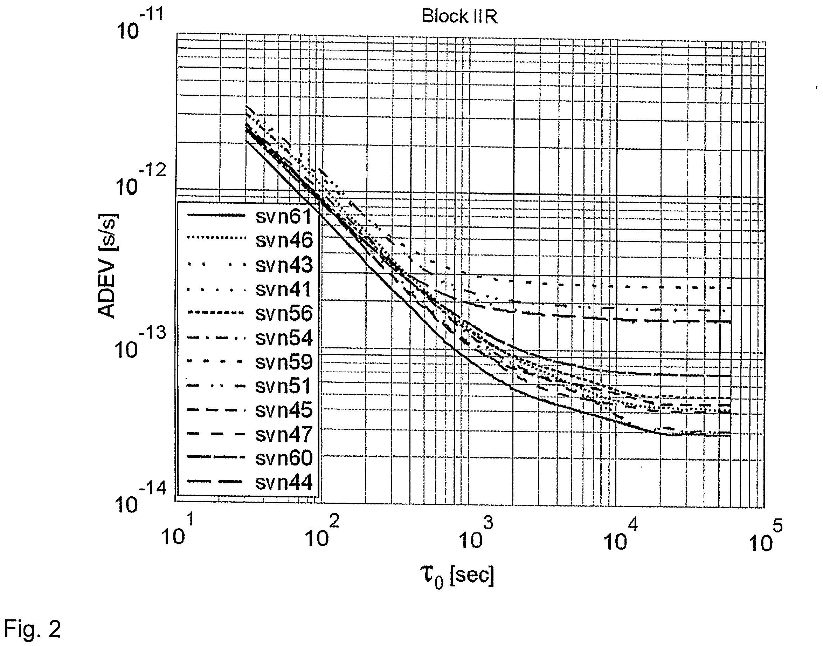

Fig. 2 stellt die Charakteristik von GPS-Satellitenuhren in Form einer Allan-Abweichung dar. Die notwendigen Doppler- und Trägerphasenmessungen wurden mit einem 2-Frequenz-GPS-Empfänger aufgenommen, der im Zeitlaboratorium der DLR in Oberpfaffenhofen installiert ist. Fig. 2 zeigt daher ein Beispiel für eine Charakterisierung der relativen Frequenzstabilität einer Satellitenuhr bei Verwendung von GPS-Trägerphasenmessungen anhand verschiedener mit svn bezeichneter Kurvenverläufe.

Zum Ausführen der Schätzung der Stabilität einer Satellitenuhr können einige Annahmen für die Berechnung diese wesentlich erleichtern.
- Eine erste Annahme kann darin bestehen, dass eine Phasen- und Frequenzschätzung dadurch errechnet werden kann, indem kontinuierlich über etwa 3 bis 4 Stunden Daten gesammelt werden. Die Messungen sollten wiederholte werden, um 20 bis 30 Datensätze zu erhaltene, um eine repräsentative statistische Datei aufbauen zu können. Aus diesem Grund beträgt die empfohlene Dauer einer Messreihe in etwa vier Wochen. Aus dieser Anforderung resultiert, dass angenommen wird, dass der GSTB-V2-Satellit sichtbar in einem deutlichen Elevationswinkel von der Bodenstation in Süddeutschland für die oben genannte Zeitspanne sichtbar ist.
- Eine zweite Annahme kann darin bestehen, dass die TUR fähig ist, um durch eine externe Zeit- (ein Puls-pro-Sekunde) und Frequenz- (5 oder 10 MHz) Referenz gesteuert zu werden.
- Eine dritte Annahme kann darin bestehen, dass die TUR fähig sein soll, die GSTB-V2- Trägerphasen- und Frequenzmessungen ausführen und deren Ergebnisse ausgeben zu können.

Prinzipiell sind jedoch auch Begrenzungen des erfindungsgemäßen Ansatzes zu nennen. Insbesondere kann ein niedriger Genauigkeitsgrad der Ergebnisse einer Offline-ODTS (ODTS= Orbit Determination and Time Synchronisation = Umlaufbahn-Bestimmung und Zeitsynchronisation) der GSTB-V2-Satelliten die gesamten Testergebnisse verschlechtern. In diesem Fall kann die Einbindung einer Laser-Entfernungsmessungseinheit (zum Bestimmen der Position des Satelliten) in Betracht gezogen werden einer, was jedoch zusätzliche Kosten verursachen würde.

Daten des ODTS- Prozesses können als zugänglich für eine OSPF-Routineoperation (OSPF= Orthography and Synchronization Processing Facility) betrachtet werden. Es sind keine spezifischen Schnittstellen zu anderen Testumgebungen nötig. Jedoch ist ein Austausch von frühen Testergebnissen zwischen diesem Test und dem Test für die sekundäre Uhrbestimmung wünschenswert.

Zum Durchführen eines Ausführungsbeispiels der vorliegenden Erfindung wird folgendermaßen vorgegangen:
- Erstens kann eine Messung der Trägerphase und Frequenz eines empfangen GSTB-V2 SIS bezüglich eines aktiven H-Masers in der Empfangsstation (das heißt am Boden) durchgeführt werden.
- Zweitens kann eine Korrektur der gemessenen SIS-Phase und - Frequenz um relativistische Effekte erfolgen, wobei beispielsweise präzise Orbits verwendet werden, welche durch OSPF berechnet wurden. Auch können Veränderungen in dem Ausbreitungsmedium, die während der der Messzeit auftreten, korrigiert werden. Hierbei kann ein ionosphärischer Fehler durch Ausnutzung eines entsprechenden Modells oder durch eine 2-Frequenz-Gallileo-Messung (so weit verfügbar) kompensiert werden. Ein troposphärischer Fehler kann er durch Verwendung eines entsprechenden Modells ebenfalls kompensiert werden.
- Drittens kann die Allan- Abweichungen aus den korrigierten SIS-Phasen- und Frequenzdaten errechnet werden, um die Kurzzeit- und mittelfristige Frequenzinstabilität der primären Satellitenuhr zu überprüfen.
- Viertens kann die Berechnung von dem Frequenzoffset und der Frequenzdrift der primären Satellitenuhr von den korrigierten Daten erfolgen, um diese Uhr zur verifizieren.

Vorzugsweise kann der erfindungsgemäße Ansatz unter Verwendung der nachfolgenden Daten und Einrichtungen ausgeführt werden:
- einem entsprechenden Empfänger (TUR), der vorzugsweise die Frequenz und das eine Puls-pro-Sekunde-Signal der Referenzuhr der Empfangsstation am Boden nutzt und die Frequenz und Phase des empfangen Sendesignals (GSTB-V2 SIS) der Satellitenuhr ausgibt.
- einer Epheremide mit einer Präzision besser als 2 m (95 %) nach einer Signalverarbeitung;
- einer Anzahl von vorbestimmten Anforderungen (beispielsweise in Form eines Anforderungskataloges) zur Charakterisierung der primären Satellitenuhr;
- Zeitpläne für die Messreihen;
- Anforderungen bezüglich der Einrichtung der TUR und der Datenschnittstelle; und
- Testergebnisse über interne Fehlerquellen des TUR.

Um den vorstehend beschriebenen Uhren-Charakterisierungstest erfolgreich durchführen zu können, werden die folgenden Elemente benötigt, die beispielsweise aus der Galileo-Infrastruktur vorhanden sind:
- ein funktionsfähiger Satellit (beispielsweise ein GSTB-V2- Satellit); und
- eine operative OSPF-Einheit, die Orbits mit einer Genauigkeit von der mindestens 2 m (95 %) bereitstellen kann.

Um das Testszenario durchführen zu können, können dabei verschiedene Hilfsmittel eingesetzt werden wie beispielsweise:
- ein troposphärisches Modell;
- ein ionosphärisches Modell oder 2-Frequenz-Messungen;
- ein Hilfsmittel um die Signal-Messungen gegenüber relativistischen Effekte und Ausbreitungseffekten zu korrigieren;
- ein Hilfsmittel, um die Allan-Abweichung aus den Frequenz-messungen zu berechnen; und
- ein Hilfsmittel um den Frequenzoffset und die Frequenzdrift zu berechnen, welche einen Teil des mit den Frequenzdaten zu überprüfenden Uhrmodells darstellt.

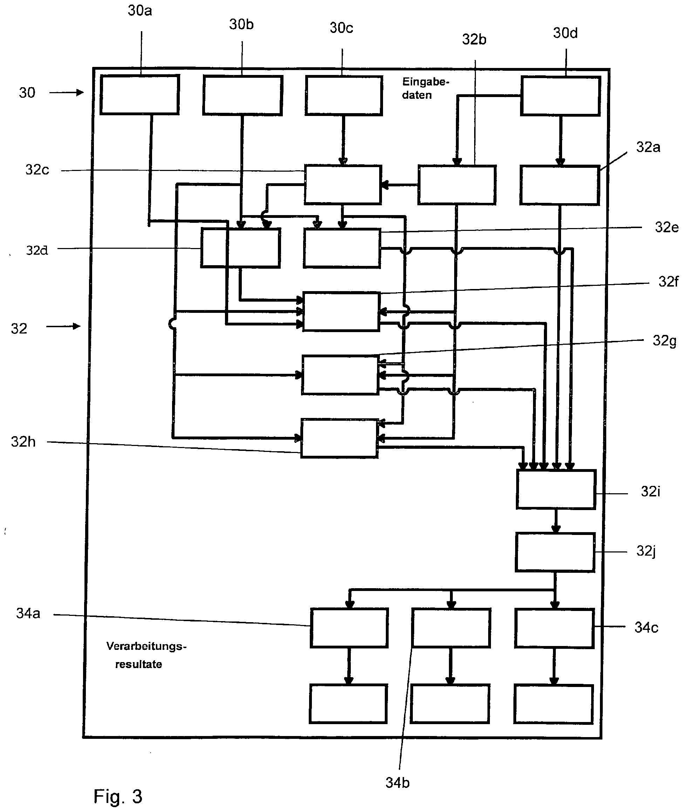

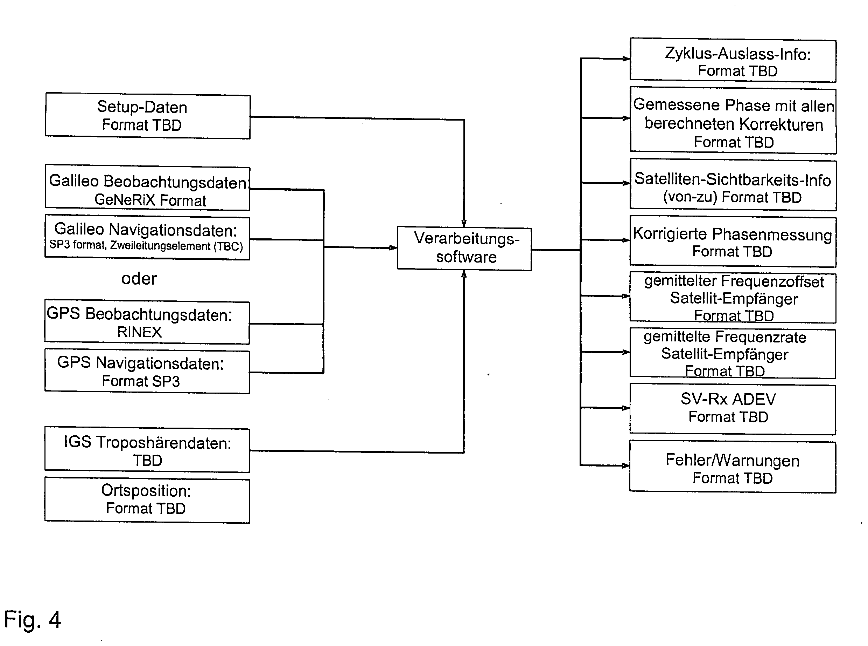

Fig. 3 zeigt ein Ausführungsbeispiel des erfindungsgemäßen Verfahrens. Hierbei werden Eingangsdaten 30 dem Verfahren zur Verfügung gestellt. Die Eingangsdaten können dabei eine troposhärische Verzögerung 30a, eine Position der Bodenstation 30b, eine Epheremide des Satelliten und einen Zählerstand ein der Satellitenuhr 30c sowie Pseudo-Entfernungsmessungen und Phasenmessungen 30d umfassen. Aus diesen Eingangsdaten 30 werden dann durch die in Fig. 3 dargestellten Verknüpfungen verschiedene Zwischenergebnisse 32 berechnet, wie beispielsweise eine Ionosphären-freie Kombination 32a, Messungszeitstempel 32b, eine Satellitenposition und einen Satellitenuhroffset 32c, eine Satellitenelevation und ein entsprechendes Azimuth 32d, eine Distanz zwischen Empfänger und Satellit 32e, eine ionosphärische Korrektur 32f, eine relativistische Korrektur 32g, eine Sagnac-Korrektur 32h, eine korrigierte Phase 32i sowie einen Zyklus-Schlupf-Erkennungswert und eine Reparatur des Zyklus-Schlupfes 32j. Aus diesem Zwischenergebnissen kann ein Frequenzoffset 34a, eine Frequenz 34b und eine Allan-Abweichung 34c berechnet werden. Fig. 4 zeigt ein weiteres Ausführungsbeispiel von Eingangsdaten und daraus berechneten Ausgangsdaten.

Abhängig von den Gegebenheiten kann das erfindungsgemäße Verfahren in Hardware ohne eine Software implementiert werden. Die Implementierung kann auf einem digitalen Speichermedium, insbesondere einer Diskette oder CD mit elektronisch aus lesbaren Steuersignal erfolgen, die so mit einem programmierbaren Computersystem zusammenwirken können, dass das entsprechende Verfahren ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

## Patentansprüche

1. Vorrichtung (20) zum Charakterisieren einer Satellitenuhr (16) in einem Satelliten (10), wobei der Satellit (10) die Satellitenuhr (16) und eine Sendeeinrichtung (18) aufweist und die Sendeeinrichtung (18) ausgebildet ist, um in Abhängigkeit von einem Stand der Satellitenuhr (16) ein Sendesignal (30) mit einer Sendefrequenz auszusenden, und wobei die Vorrichtung die folgenden Merkmale umfasst:
eine Empfängeruhr (28), die eine höhere Genauigkeit als die Satellitenuhr (16) aufweist;
eine Empfangseinrichtung (24, 22), die ausgebildet ist, um das Sendesignal (30) zu empfangen und hieraus ein Empfangssignal zu bestimmen und um aus dem Empfangssignal unter Verwendung der Empfängeruhr (28) eine Empfangssignalfrequenz und eine Empfangssignalphase zu bestimmen;
eine Auswerteeinrichtung (26), die ausgebildet ist, um aus
der Empfangssignalfrequenz und der Empfangssignalphase einen Frequenzoffset (34a) und eine Frequenzdrift und eine Allan-Abweichung der Sendefrequenz zu bestimmen und um aus dem bestimmten Frequenzoffset (34a) und der Frequenzdrift und der Allan-Abweichung die Stabilität des Ganges der Satellitenuhr (16) oder die Gültigkeit einer Zeitangabe der Satellitenuhr (16) zu bestimmen, um hierdurch die Satellitenuhr (16) zu charakterisieren, **dadurch gekennzeichnet, dass** die Auswerteeinrichtung (26) ferner ausgebildet ist, um in der Empfangssignalfrequenz oder der Empfangssignalphase aufgrund von relativistischen Effekten auftretende Fehler auf der Basis von vorberechneten Umlaufbahndaten des Satelliten zu korrigieren.

2. Vorrichtung gemäß einem der Ansprüche 1,
**dadurch gekennzeichnet, dass**
die Auswerteeinrichtung (26) ausgebildet ist, um beim Bestimmen des Frequenzoffsets und der Frequenzdrift aus der Empfangssignalfrequenz oder der Empfangssignalphase einen ionoshärischen Fehler im Signalübertragungspfad zwischen dem Satelliten (10) und der Vorrichtung (20) durch das Verwenden eines vorberechneten Ionosphären-Kompensationsmodells zu kompensieren.

3. Vorrichtung gemäß einem der Ansprüche 1 bis 2,
**dadurch gekennzeichnet, dass**
der Satellit (10) ausgebildet ist, um ein Referenzsignal auszusenden, das eine von einer Frequenz des Sendesignals (30) verschiedene Referenzfrequenz aufweist,
die Empfangseinrichtung (22, 24) ausgebildet ist, um das Referenzsignal mit der Referenzfrequenz zu empfangen und wobei ferner die Auswerteeinrichtung (26) ausgebildet ist, um einen Fehlerkorrekturterm zu einem ionoshärischen Fehler im Signalübertragungspfad zwischen dem Satelliten (10) und der Vorrichtung (20) durch einen Vergleich zwischen der Empfangssignalfrequenz des Empfangssignals und der Referenzfrequenz des Referenzsignals zu bestimmen und den bestimmten Fehlerkorrekturterm zur Bestimmung des Frequenzoffsets oder der Frequenzdrift zu verwenden.

4. Vorrichtung gemäß einem der Ansprüche 1 bis 3,
**dadurch gekennzeichnet, dass**
die Auswerteeinrichtung (26) ausgebildet ist, um beim Bestimmen des Frequenzoffsets (34a) und der Frequenzdrift aus der Empfangssignalfrequenz oder der Empfangssignalphase einen troposphärischen Fehler im Signalübertragungspfad zwischen dem Satelliten (10) und der Vorrichtung (20) durch das Verwenden eines vorberechneten Troposphären-Kompensationsmodells zu kompensieren.

5. Vorrichtung gemäß einem der Ansprüche 1 bis 4,
**dadurch gekennzeichnet, dass**
die Vorrichtung (20) ausgebildet ist, um eine Charakterisierung der Satellitenuhr (16) in einem Zeitraum von mindestens drei Stunden durchzuführen.

6. Vorrichtung gemäß einem der Ansprüche 1 bis 5,
**dadurch gekennzeichnet, dass**
die Empfängeruhr (28) einen aktiven H-Maser umfasst.

7. Vorrichtung gemäß Anspruch 1,
**dadurch gekennzeichnet, dass**
die Empfängeruhr (28) mit internationalem Zeit-Referenzstandard synchronisiert ist.

8. Verfahren zum Charakterisieren einer Satellitenuhr (16) in einem Satelliten (10), wobei der Satellit (10) die Satellitenuhr (16) und die eine Sendeeinrichtung (18) aufweist, wobei die Sendeeinrichtung (18) ausgebildet ist, um in Abhängigkeit von einem Stand der Satellitenuhr (16) ein Sendesignal (30) auszusenden und wobei das Verfahren in einer Einheit (20) ausgeführt wird die eine Empfängeruhr (28) aufweist, die eine höhere Genauigkeit als die Satellitenuhr (16) aufweist und wobei das Verfahren die folgenden Schritte umfasst:
Empfangen des Sendesignals (30), um hieraus ein Empfangssignal zu bestimmen und um aus dem Empfangssignal unter Verwendung der Empfängeruhr (28) eine Empfangssignalfrequenz und eine Empfangssignalphase zu bestimmen;
Auswerten des Empfangssignals (30), um aus der Empfangssignalfrequenz und der Empfangssignalphase einen Frequenzoffset und eine Frequenzdrift und eine Allan-Abweichung der Sendefrequenz zu bestimmen und um aus dem bestimmten Frequenzoffset und der Frequenzdrift und der Allan-Abweichung die Stabilität des Ganges der Satellitenuhr (16) oder die Gültigkeit einer Zeitangabe der Satellitenuhr (16) zu bestimmen, um
hierdurch die Satellitenuhr (16) zu charakterisieren, **dadurch gekennzeichnet, dass**
in der Empfangssignalfrequenz oder der Empfangssignalphase aufgrund von relativistischen Effekten auftretende Fehler auf der Basis von vorberechneten Umlaufbahndaten des Satelliten korrigiert werden.

9. Computerprogramm , umfassend Befehle, die bei der Ausführung des Programms durch einen Computer diesen veranlassen, das Verfahren nach Anspruch 8 auszuführen.

## Claims

1. An apparatus (20) for characterizing a satellite clock (16) in a satellite (10), the satellite (10) having the satellite clock (16) and a transmitting device (18), the transmitting device (18) being adapted to transmit a transmission signal (30) having a transmitting frequency that is a function of a state of the satellite clock (16), the apparatus comprising the following features:
a receiver clock (28) having a higher accuracy than the satellite clock (16);
a receiving device (24, 22) which is adapted to receive the transmission signal (30) and to determine a received signal therefrom and to determine a received signal frequency and a received signal phase from the received signal using the receiver clock (28);
an evaluation device (26) which is adapted to determine a frequency offset (34a) and a frequency drift and an Allan deviation of the transmission frequency from the received signal frequency and the received signal phase, and to determine the stability of the rate of the satellite clock (16) or the validity of a time indication of the satellite clock (16) from the determined frequency offset (34a) and the frequency drift and the Allan deviation, thereby characterizing the satellite clock (16), **characterized in that**
the evaluation device (26) is further adapted to correct errors occurring in the received signal frequency or the received signal phase as a result of relativistic effects on the basis of precalculated orbit data of the satellite.

2. Apparatus according to any one of claim 1,
**characterized in that**
the evaluation device (26) is adapted to compensate for an ionospheric error in the signal transmission path between the satellite (10) and the apparatus (20) by using a precalculated ionospheric compensation model when determining the frequency offset and frequency drift from the received signal frequency or received signal phase.

3. Apparatus according to any one of claims 1 to 2,
**characterized in that**
the satellite (10) is adapted to transmit a reference signal having a reference frequency which differs from a frequency of the transmission signal (30),
the receiving device (22, 24) is adapted to receive the reference signal having the reference frequency and wherein the evaluation device (26) is further adapted to determine an error correction term to an ionospheric error in the signal transmission path between the satellite (10) and the device (20) by a comparison between the received signal frequency of the received signal and the reference frequency of the reference signal and to use the determined error correction term to determine the frequency offset or frequency drift.

4. Apparatus according to any one of claims 1 to 3,
**characterized in that**
the evaluation device (26) is adapted to compensate a tropospheric error in the signal transmission path between the satellite (10) and the appratus (20) by using a precalculated tropospheric compensation model when determining the frequency offset (34a) and frequency drift from the received signal frequency or received signal phase.

5. Apparatus according to any one of claims 1 to 4,
**characterized in that**
the apparatus (20) is adapted to perform a characterization of the satellite clock (16) over a time period of at least three hours.

6. A device according to any one of claims 1 to 5,
**characterized in that**
the receiver clock (28) comprises an active H-maser.

7. Apparatus according to claim 1,
**characterized in that**
the receiver clock (28) is synchronised by means of an international time reference standard.

8. A method of characterising a satellite clock (16) in a satellite (10), the satellite (10) having the satellite clock (16) and a transmitting device (18), the transmitting device (18) being adapted to transmit a transmit signal (30) as a function of a state of the satellite clock (16), the method being carried out in a unit (20) having a receiver clock (28) which has a higher accuracy than the satellite clock (16), and the method comprising the steps of:
receiving the transmission signal (30) to determine a received signal therefrom and to determine a received signal frequency and a received signal phase from the received signal using the receiver clock (28);
evaluating the received signal (30) in order to determine a frequency offset and a frequency drift and an Allan deviation of the transmission frequency from the received signal frequency and the received signal phase and in order to determine the stability of the rate of the satellite clock (16) or the validity of a time indication of the satellite clock (16) from the determined frequency offset and the frequency drift and the Allan deviation, thereby characterizing the satellite clock (16), **characterized in that**
errors occurring in the received signal frequency or the received signal phase as a result of relativistic effects are corrected on the basis of precalculated orbit data of the satellite.

9. A computer program comprising instructions which, when the program is executed by a computer, cause the computer to perform the method of claim 8.

## Revendications

1. Dispositif (20) pour caractériser une horloge de satellite (16) dans un satellite (10), le satellite (10) comprenant l'horloge de satellite (16) et un moyen d'émission (18) et le moyen d'émission (18) étant conçu pour émettre un signal d'émission (30) avec une fréquence d'émission en fonction d'une indication de l'horloge de satellite (16), et le dispositif comprenant les caractéristiques suivantes :
une horloge réceptrice (28) qui présente une précision supérieure à celle de l'horloge de satellite (16) ;
un moyen de réception (24, 22) qui est conçu pour recevoir le signal d'émission (30), pour déterminer un signal de réception à partir de celui-ci et pour déterminer une fréquence de signal de réception et une phase de signal de réception à partir du signal de réception en utilisant l'horloge réceptrice (28) ;
un moyen d'évaluation (26) qui est conçu pour déterminer, à partir de la fréquence de signal de réception et de la phase de signal de réception, un décalage de fréquence (34a), une dérive de fréquence et une déviation d'Allan de la fréquence d'émission, et pour déterminer, à partir du décalage de fréquence (34a), de la dérive de fréquence et de la déviation d'Allan déterminés, la stabilité de la marche de l'horloge de satellite (16) ou la validité d'une indication horaire de l'horloge de satellite (16) afin de caractériser ainsi l'horloge de satellite (16),
**caractérisé en ce que**
le moyen d'évaluation (26) est en outre conçu pour corriger des erreurs apparaissant dans la fréquence de signal de réception ou dans la phase de signal de réception en raison d'effets relativistes sur la base de données orbitales précalculées du satellite.

2. Dispositif selon la revendication 1,
**caractérisé en ce que**
le moyen d'évaluation (26) est conçu pour compenser, lors de la détermination du décalage de fréquence et de la dérive de fréquence à partir de la fréquence de signal de réception ou de la phase de signal de réception, une erreur ionosphérique dans le trajet de transmission du signal entre le satellite (10) et le dispositif (20) en utilisant un modèle de compensation ionosphérique précalculé.

3. Dispositif selon l'une des revendications 1 à 2,
**caractérisé en ce que**
le satellite (10) est conçu pour émettre un signal de référence présentant une fréquence de référence différente d'une fréquence du signal d'émission (30),
le moyen de réception (22, 24) est conçu pour recevoir le signal de référence ayant la fréquence de référence et dans lequel, en outre, le moyen d'évaluation (26) est conçu pour déterminer un terme de correction d'erreur relatif à une erreur ionosphérique dans le trajet de transmission du signal entre le satellite (10) et le dispositif (20) par comparaison entre la fréquence de signal de réception du signal de réception et la fréquence de référence du signal de référence, et pour utiliser le terme de correction d'erreur déterminé pour déterminer le décalage de fréquence ou la dérive de fréquence.

4. Dispositif selon l'une des revendications 1 à 3,
**caractérisé en ce que**
le moyen d'évaluation (26) est conçu pour compenser, lors de la détermination du décalage de fréquence (34a) et de la dérive de fréquence à partir de la fréquence de signal de réception ou de la phase de signal de réception, une erreur troposphérique dans le trajet de transmission du signal entre le satellite (10) et le dispositif (20) en utilisant un modèle de compensation troposphérique précalculé.

5. Dispositif selon l'une des revendications 1 à 4,
**caractérisé en ce que**
le dispositif (20) est conçu pour effectuer une caractérisation de l'horloge de satellite (16) pendant une période d'au moins trois heures.

6. Dispositif selon l'une des revendications 1 à 5,
**caractérisé en ce que**
l'horloge réceptrice (28) comprend un Maser H actif.

7. Dispositif selon la revendication 1,
**caractérisé en ce que**
l'horloge réceptrice (28) est synchronisée avec un étalon de temps de référence international.

8. Procédé pour caractériser une horloge de satellite (16) dans un satellite (10), le satellite (10) présentant l'horloge de satellite (16) et un moyen d'émission (18), le moyen d'émission (18) étant conçu pour émettre un signal d'émission (30) en fonction d'une indication de l'horloge de satellite (16), le procédé étant mis en œuvre dans une unité (20) comprenant une horloge réceptrice (28) qui présente une précision supérieure à celle de l'horloge de satellite (16) et le procédé comprenant les étapes suivante :
réception du signal d'émission (30) pour déterminer à partir de celui-ci un signal de réception et pour déterminer une fréquence de signal de réception et une phase de signal de réception à partir du signal de réception en utilisant l'horloge réceptrice (28) ;
évaluation du signal de réception (30) pour déterminer, à partir de la fréquence de signal de réception et de la phase de signal de réception, un décalage de fréquence, une dérive de fréquence et une déviation d'Allan de la fréquence d'émission, et pour déterminer, à partir du décalage de fréquence, de la dérive de fréquence et de la déviation d'Allan déterminés, la stabilité de la marche de l'horloge de satellite (16) ou la validité d'une indication horaire de l'horloge de satellite (16) afin de caractériser ainsi l'horloge de satellite (16),
**caractérisé en ce que**
les erreurs apparaissant dans la fréquence de signal de réception ou dans la phase de signal de réception en raison d'effets relativistes sont corrigées sur la base de données orbitales précalculées du satellite.

9. Programme d'ordinateur comprenant des instructions qui, lorsque le programme est exécuté par un ordinateur, amènent ce dernier à mettre en œuvre le procédé selon la revendication 8.
